# EUROPEAN PATENT APPLICATION

(11) **EP 1 071 269 A1**
(43) Date of publication of application: **24.01.2001**
(21) Application number: 99907937.9
(22) Date of filing: 15.03.1999
(51) Int. Cl.: H04M 11/06, H04M 3/00, H04L 12/02

(54) **TRANSMISSION METHOD FOR SUBSCRIBER LINE**

(30) Priority: 08.04.1998 JP 9641098; 24.04.1998 JP 11522398; 18.05.1998 JP 13572598
(71) Applicant: FUJITSU LIMITED, Kawasaki-shi, Kanagawa 211-8588 (JP)
(72) Inventor: SASAKI, Takashi Fujitsu Limited, Kawasaki-shi Kanagawa 211-8588 (JP); MIYOSHI, Seiji Fujitsu Limited, Kawasaki-shi Kanagawa 211-8588 (JP); KOIZUMI, Nobukazu Fujitsu Limited, Kawasaki-shi Kanagawa 211-8588 (JP); MURATA, Hiroyasu Fujitsu Limited, Kawasaki-shi Kanagawa 211-8588 (JP); FUJIMURA, Noriaki c/o Fujitsu PC Corporation, Santa Clara, CA 95054 (US); NAGASHIMA, Masashi Fujitsu Limited, Kawasaki-shi Kanagawa 211-8588 (JP); ARAI, Yasuhiro Fujitsu Limited, Kawasaki-shi Kanagawa 211-8588 (JP)
(74) Representative: HOFFMANN - EITLE
(86) International application number: JP9901256
(87) International publication number: WO9953679

(57) **Abstract**

A remote terminal line digital transmission method for performing a high-speed data transmission by using an existing remote terminal line, that is referred to as a telephone line, is disclosed.

In a transmission method for a remote terminal line for performing a high speed data transmission by using a high frequency band of the remote terminal line while coexisting with a telephone, a signal quality output signal including a periodic noise is extracted from a receiving signal received through the remote terminal line; and the signal quality output signal is sampled by a predictive filter and the sampled values are averaged;
whereby the amplitude and the period of the noise is predicted so that a noise having a periodicity is automatically predicted.

## Description

### Technical Field

The present invention relates to a remote terminal line digital transmission method (xDSL: Digital Remote terminal Line Transmission method) for carrying out a high speed data transmission coexisting with telephones by using existing remote terminal lines (hereinafter referred to as metallic lines) called telephone lines. In xDSL, there are various techniques such as HDSL, ADSL, VDSL, etc, depending on the differences of transmission speeds or the like. These are generally called xDSL.

In the ADSL (Asymmetric DSL) transmission which is an example of the xDSL, the transmission speed in an up link from a remote terminal to a center is 16 Kbps to 640 Kbps, and the transmission speed in a down link from the center to the remote terminal is 1.5 Mbps to 9 Mbps.

In a system to which the ADSL transmission method is applied, the center and the remote terminal are connected by an existing metallic cable made of a copper wire. The center is connected, through a splitter for separating signals depending on their frequencies, to a switch and a center modem. The splitter can separate the signals into signals of a low frequency band of about 4 KHz used in the telephone voice, and signals of high frequency band used for modulation in the ADSL modem. On the other hands in the remote terminal, a splitter is connected to the metallic cable, and, through this splitter, a telephone set, a modem that is dedicated for use to carry out the ADSL, and a personal computer (PC) are connected.

A splitter-less type system without using the splitter for separating the frequencies is also known. In this system, the frequency band used in the ADSL is narrowed and is limited to a high frequency band side.

By using this ADSL transmission system, a high speed digital signal of about 7 Mbits/sec at a maximum can be transmitted so that it can be used for high speed internet access or video on demand.

In this way, by the ADSL transmission, a conventional telephone signal transmission and a high speed data transmission can be realized on the same transmission line, so that a high speed digital transmission service can be provided by using the conventional metallic cable (i.e., a telephone line) as it is without laying a new line for a high speed transmission such as an ISDN or the like.

### Background Art

As digital transmission methods used in the conventional ADSL transmission in which signals are transmitted by using a high frequency band on a metallic cable, there are known a single carrier wave transmission method called a CAP (Carrierless Amplitude Phase modulation) in which a high speed data transmission is carried out by using a single carrier in each of the up ward signal and down ward signal, and a multi carrier-wave transmission method called a DMS (Discrete Multitone Transmission) in which data are carried by multiple carriers in both the up link and the down link.

In both of the above methods, a higher frequency band is used in comparison with the telephone signal for receiving the telephone service. Therefore, adjacent cables (or lines) tend to be influenced by cross talk or by noise in a nigh frequency band so that these methods have problems of deterioration of signal quality or of lowering of the transmission speed.

In particular, in Japan, a ping-pong transmission method utilizing the ISDN line is commonly used, and since this method utilizes a high frequency band, noises on the ISDN line often leak to the metallic cable through which a high speed data transmission is conducted using the ADSL signals, so that there were cases in which the signal quality was lowered or the transmission speed was lowered.

To avoid this problem, one method is known in which the frequency band is divided to avoid a leakage. In this method, the frequency band used by the ADSL signals is placed in a higher frequency band so as to separate it from the lower frequency band used by the telephone signals or the ISDN signals.

In the ISDN signals used in the ping-pong transmission method, however, harmonics extend up to the higher frequency band and, in the higher frequency band, the cross talk tends to be large, so that it is difficult to avoid cross talk.

In more detail, the frequency band used in the ADSL transmission is in the range between about 30 KHz and about 180 KHz for the signal on the up link from a remote terminal to the center, and in the range approximately between about 200 KHz and about 1 MHz for the signal on the down link from the center to the remote terminal. On the other hand, the frequency band used for the data transmission in the ISDN transmission is in the range between 3 KHz and 320 KHz. Although the frequency band of the up signal in the ADSL transmission completely overlaps with the frequency band of the data signal in the ISDN transmission, since the frequency band is a low frequency band, the influence of the cross talk is small.

On the ISDN line, however, signals with the frequencies of 320 KHz or more that are not used for the data transmission are also transmitted. This is because the accuracy of a band pass filter for passing only the band between 3 KHz and 320 KHz is poor so that it cannot completely cut the signals of 320 KHz or more. The signals of 320 KHz or more, which are called harmonics, harmfully influence the downward signals for the ADSL transmission which uses the high frequency band. That is, even when the amplitude of the harmonics is small, the harmonics become noise that largely influences a high frequency band that may be easily influenced by noises.

Another method can be conceived in which the data transmission band of the up link and the downlink in the ADSL transmission is set in the low frequency band so as to reduce the influence of cross talk. This method, however, has a disadvantage in that the data transmission speed cannot be increased because the data transmission is carried out in the narrow and low frequency band.

A still another method can be conceived in which, by utilizing the characteristic of a ping-pong transmission system in which signals are transmitted alternately, periodically and in a burst mode, the signal-point arrangement (constellation) in a period of small cross talk is made to be the one for a high speed data transmission, and the signal-point arrangement in a period of large cross talk is made to be the one for a low speed data transmission.

According to this method, the period of the ping-pong transmission that forms the cross talk cycle must be in synchronization with the switching period of the constellation control. Therefore, the synchronization signal must be obtained from the ISDN apparatus carrying out the ping-pong transmission. Therefore, there is a disadvantage in that the construction becomes complex so that a simple installation becomes difficult.

Further, since the setting of the transmitting signal points and speed are complex, and since this must be adjusted at an initial pull-in time, it is difficult to cope with a cross talk that changes over time.

### Disclosure of the Invention

The first object of the present invention is to automatically predict an output waveform of a noise having periodicity.

The second object of the present invention is to realize an optimal transmission efficiency corresponding to the noise having periodicity.

To attain the above-mentioned first object, according to the first aspect of the present invention, there is provided a noise predicting method characterized in that it comprises the steps of:
extracting, from received signals, a signal quality output signal including a noise having periodicity; and
sampling said signal quality output signal and averaging the sampled data;
   whereby the amplitude and the period of said noise is predicted. In more detail, there is provided a transmission method for a remote terminal line for carrying out a high speed data transmission by using a high frequency band of a metallic cable coexisting with telephones, characterized in that it comprises the steps of:
extracting, from signals received through said metallic cable, a signal quality output signal including a noise having a periodic characteristic; and
sampling said signal quality output signal by means of a predictive filter and averaging the sampled data, so as to predict the amplitude and the period of said noise.

According to the first aspect of the present invention, when the signal quality output signal is sampled and the sampled data are averaged, the input signal is reproduced as a periodic variation along a time axis. Therefore, by analyzing the received signal transmitted through the metallic cable, the noise waveform can be predicted and reproduced by using only the received signals.

To attain the above-mentioned first and the second objects, the transmission method for a remote terminal according to the second aspect of the present invention is characterized in that, in the transmission method for a remote terminal according to the first aspect, it comprises the steps of:
feeding back of the amplitude and the period of said predicted noise to the transmitting side; and
controlling the constellation of data transmitted based on the amplitude and the period of said fed back noise.

According to the second aspect, by effecting the feedback of the wave form of the noise consisting of the automatically predicted amplitude and the period, the constellation of data to be transmitted by the transmitting side is changed so that, even when a noise is included in the data to be transmitted, the influence due to the noise can be reduced.

To attain the above-mentioned first and the second objects, the transmission method according to the third aspect of the present invention is characterized in that, in the transmission method for a remote terminal according to the first aspect, it comprises the steps of;
temporarily storing the amplitude and the period of said predicted noise;
when there is a difference between an amplitude and a period of a newly predicted noise and the amplitude and the period of said stored noise, feeding back the difference as a differential signal to said transmitting side; and
based on the fed back differential signal, controlling the constellation of the data to be transmitted.

According to the third embodiment, by feeding back the waveform consisting of the automatically predicted amplitude and the period, the constellation of the data to be transmitted next by the transmitting side is changed, so that, even when a noise is included in the data to be transmitted, the influence by the noise can be reduced. In addition, the previously predicted and stored amplitude and the period of the noise is compared with the currently predicted and stored amplitude and the period of the noise, and, if there is a difference, only the difference is fed back as a difference signal to the transmitting side, whereby the constellation control can be performed by the difference signal which is a small amount of transmission capacity.

To attain the above-mentioned first object, according to the fourth aspect of the present invention, there is provided a transmission method for a remote terminal line for performing a high speed data transmission by using a high frequency band of a metallic cable while coexisting with a telephone, characterized in that it comprises the steps of:
extracting, from a received signal received through a remote terminal line, a signal quality signal including a noise having periodicity;
transmitting said extracted signal quality output signal to a transmitting side; and
predicting, at the transmitting side, the amplitude and the period of the noise included in the signal quality output signal, by a predictive filter constructed of double integration circuits.

The predictive filter for extracting the signal quality output signal should be provided at the receiving side through the metallic cable, however, according to the fourth aspect, the predictive filter for predicting the amplitude and the period of the noise may not always be provided at the receiving side. When the amplitude and the period of the noise is to be predicted, the signal quality output signal is transmitted, as it is to the transmitting side and, by the predictive filter provided at the transmitting side, the signal quality output signal is sampled and averaged to reproduce the input signal as a periodic variation on a time axis. Therefore, by analyzing the received signal transmitted through the metallic cable, the waveform of the noise can be automatically predicted and reproduced by the received signal only.

To attain the above second object, according to the fifth aspect of the present invention, there is provided a transmission method for a remote terminal line for performing a high speed data transmission by using a high frequency band of a metallic cable along with a telephone, characterized in that it comprises the steps of:
detecting a noise having a periodicity from a received signal received through said remote terminal line;
temporarily storing information about said detected noise; and
feeding back, if there is a difference between information about a newly detected noise and the information about the stored noise, the difference as a difference signal to the transmitting side.

According to the fifth aspect, by feeding back the information about the noise to the transmitting side, the constellation of the data to be transmitted by the transmitting side is changed so that, even when the data to be transmitted next includes a noise, the influence due to the noise can be reduced. Further, the information about the noise previously stored is compared with the information about the currently detected noise, and, if there is a difference, only the difference is sent as a difference signal to the transmitting side. Thug, the change of the constellation of the data can be performed with the difference signal that requires a small amount of transmission capacity.

### BRIEF DESCRIPTION OF THE DRAWINGS

The above objects and features of the present invention will be more apparent by reading the following best mode for carrying out the invention with reference to the accompanying drawings. In the figures,
Fig. 1 is a diagram showing a first embodiment of the present invention;
Fig. 2 is a diagram showing a signal quality-detecting unit (SQD);
Fig. 3 is a flowchart showing the process in the first embodiment;
Figs. 4A-4E are diagrams showing output waveforms in the present invention;
Fig. 5 is a diagram showing a second embodiment of the present invention;
Fig. 6 is a flowchart showing the process in the second embodiment;
Figs. 7A-7B are diagrams showing the difference signals in detail;
Fig. 8 is a diagram showing a third embodiment of the present invention;
Fig. 9 is a flowchart showing the process in the third embodiment;

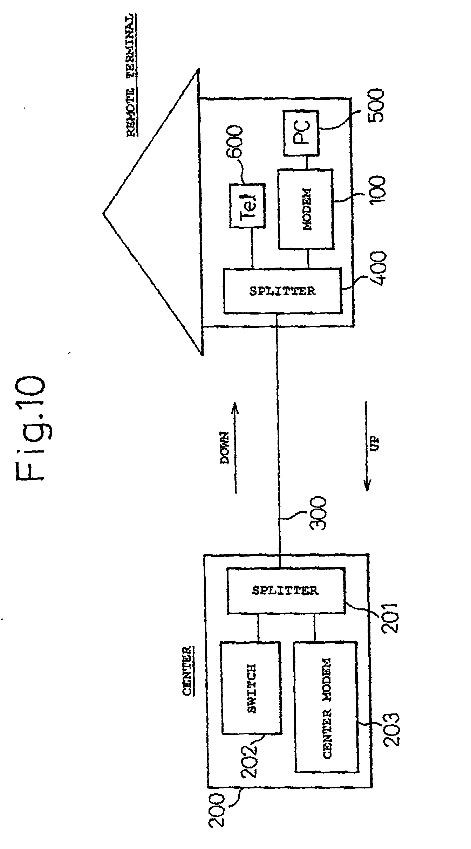

Fig. 10 is a diagram showing a system to which ADLS is applied;
Figs. 11A-11B are diagrams showing a digital transmission method used in ADSL;
Fig. 12 is a diagram showing frequency bands of ADSL and of ISDN;
Figs. 13A-13B are diagrams showing the relation between the constellation and the amount of noise;
Fig. 14 is a diagram showing a fourth embodiment of the present invention;
Fig. 15 is a diagram showing a bit-map table in detail;
Fig. 16 is a diagram showing a time chart of the frequency noise and each information in the fourth embodiment;
Fig. 17 is a diagram showing a differential information transmitting timing;
Fig. 18 is a diagram showing a bit map from the beginning of the communication to the time after the communication speed is made to be optimum;
Fig. 19 is a diagram showing the method to change the bi table as a countermeasure to the round trip delay;
Fig. 20 is a diagram showing the method to change the CP length as a countermeasure to the round trip delay;
Fig. 21 is a diagram showing the method to change the length of the cyclic prefix (CP) to realize two kinds of bit index (bi) tables with the ratio of 1:1;
Fig. 22 is a diagram showing a transmission method of a clock of DMT symbols the divided frequency of which is 400Hz;
Fig. 23 is a diagram showing a TCM NEXT spectrum and a carrier without any influence;
Fig. 24 is a diagram showing a method of a PLL control to bi tables;
Fig. 25 is a diagram showing a cross talk detecting sequence;
Fig. 26 is a diagram showing a method for measuring cross talk;
Fig. 27 is a diagram showing a process in a cross talk integrator; and
Fig. 28 is a diagram showing a bi table synchronization sequence.

### BEST MODE FOR CARRYING OUT THE INVENTION

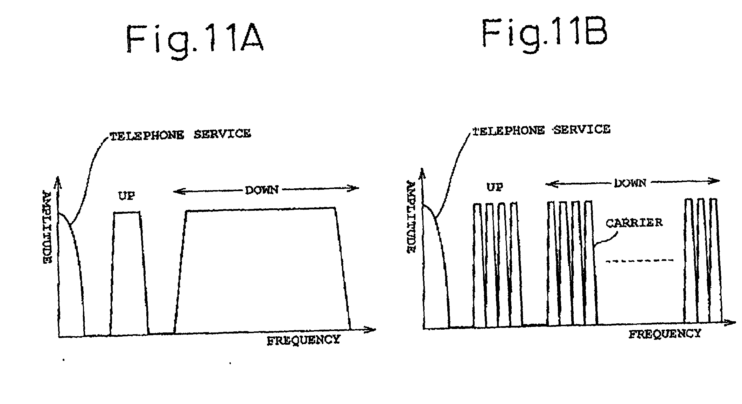

Before explaining the embodiment of the present invention, a prior-art digital transmission method used for ADSL and the problems in ADSL transmission will be explained with reference to Figs. 11A-11B. As a prior-art digital transmission method used for ADSL for transmitting signals by using a high frequency band through a metallic cable, there are known a Carrierless Amplitude Phase modulation (CAP) which is a transmission method with a single carrier in which a single carrier is used in the up link signal and a single carrier is used in the down link signal to realize a high speed data transmission, and a multi-carrier method called as a Discrete Multi-tone Transmission (DMT) in which, in both the up link and the down link, data are carried by a plurality of carriers (carrier waves) to realize a high speed data transmission.

In both methods, as previously mentioned, the ISDN signal in ping-pong transmission is accompanied by higher harmonics, which have a higher frequency band. Since the cross talk is large in the higher frequency band, it is difficult to avoid cross talk.

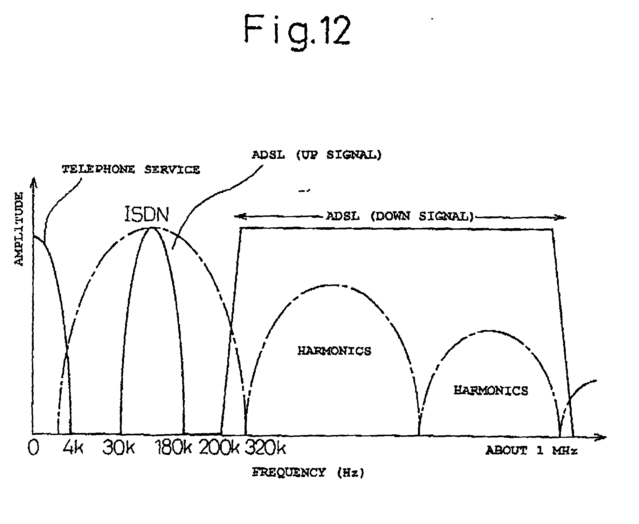

In more detail, with reference to Fig. 12, the frequency band of the up link signal from a remote terminal to a center used in the ADSL transmission ranges from about 30 KHz to about 180 KHz, and the frequency band of the down link signal from the center to the remote terminal ranges front about 200 KHz to about 1 MHz, as shown by solid curves. On the other hand, the frequency band used for data transmission by the ISDN transmission ranges front 3 KHz to 320 KHz, as shown by a dash-dot curve. Although the frequency band of the up link signals by the ADSL transmission completely overlaps with frequency band of the data signal of the ISDN transmission, these frequency bands are low frequency bands so that the influence of cross talk is small.

However, on the ISDN line, signals having a frequency of 320 KHz or more, which are not used for the data transmission, are also transmitted. This is because the accuracy of a bandpass filter for passing only the frequency band of 3 KHz to 320 KHz is bad so that signals having frequencies higher than 320 KHz cannot be completely cut. The signals having frequencies higher than 320 KHz are called higher harmonics. The higher harmonics harmfully influence the down link signals which use the high frequency band. For example, even when the amplitude of the higher harmonics is small, the higher harmonics become a noise that largely influences the signals in the high frequency band in which the signals are easily influenced by noise.

Embodiments of the present invention will be described with reference to the drawings.

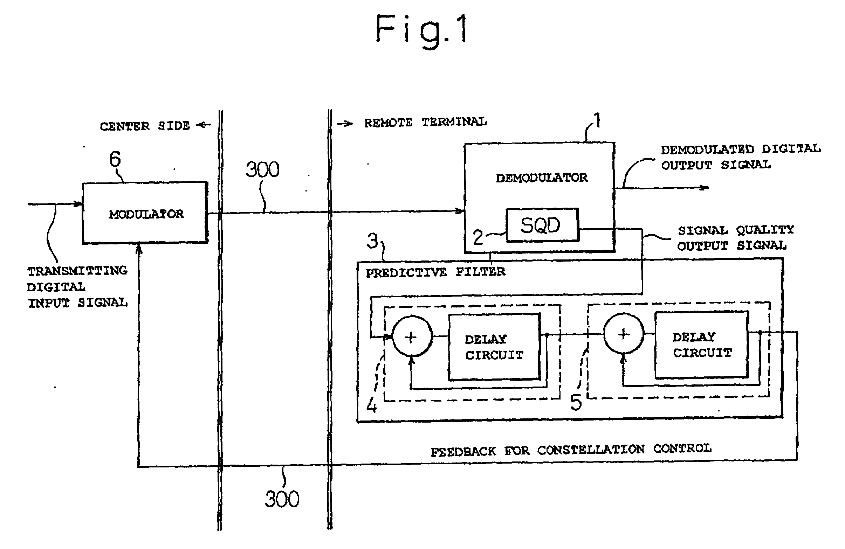

Fig. 1 is a diagram showing a first embodiment of the present invention.

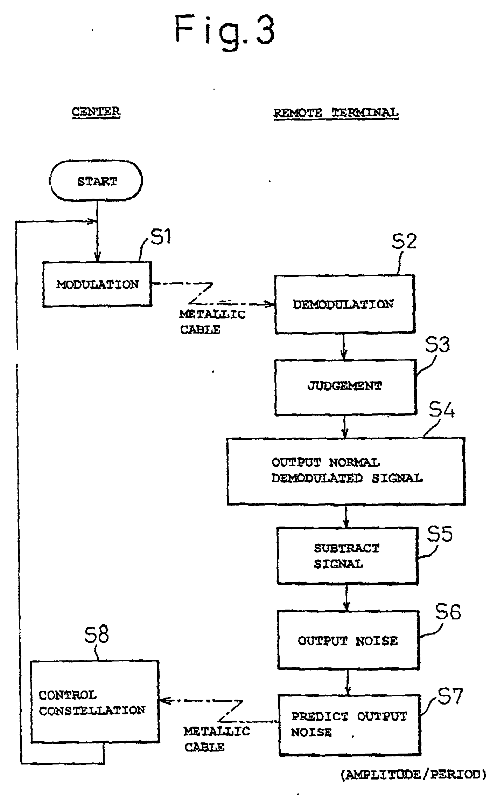

Fig. 3 is a flow chart showing the process in the first embodiment.

In Fig. 1, a transmitting digital input signal is input into a modulator 6 and is modulated to be a modulated output signal, which is output to a metallic cable 300 (Fig. 3: S1).

The signal through the metallic cable 300 is input to a demodulator 1 and is demodulated (Fig. 3: S2). The demodulator 1 outputs a demodulated digital output signal and a signal quality output signal that is output from a signal quality detector (SQD) 2 within the demodulator 1 (Fig. 3: S3).

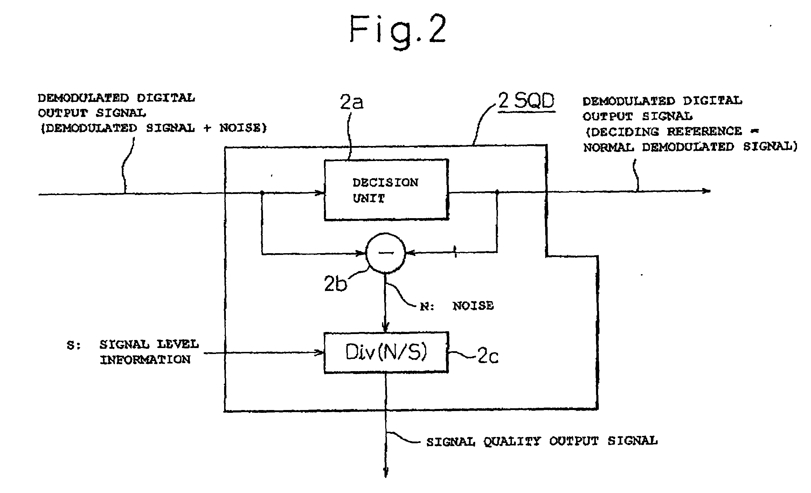

Fig. 2 shows the signal quality detector (SQD) 2 in detail. As shown in Fig. 2, the demodulated digital output signal, which includes a periodic noise in a high frequency band, such as cross talk from the ISDN line, as an example, is judged by a decision unit 2a (Fig. 3: S3) to output a deciding reference, i.e., a normal demodulated signal.

After this, a subtracter 2b calculates a difference between the demodulated digital output signal including the periodic noise and the normal demodulated signal (Fig. 3: S5), that is, the subtracter 2b obtains the difference to output the periodic noise N (Fig. 3: S6). This output represents an index of the noise component. The larger this amount is, the larger the difference between the demodulated output and the deciding reference is, that is, the larger the noise is.

Then a dividing circuit (Div) 2c obtains the ratio between the amount of the noise and a signal level information S, i.e., a SN ratio, from the expression N/S.

The obtained SN ratio is output as a signal quality output signal from the signal quality detector (SQD) 2 and is input into a predictive filter 3. The predictive filter 3 includes-two-stage integrating circuits 4 and 5 that appropriately sample and average the obtained SN ratio, whereby the input signal is reproduced as a periodical variation on a time axis. Thus, from the receiving signal transmitted through the metallic cable, it is possible to automatically predict and reproduce an output waveform representing the amplitude and the period of the periodic noise.

The output signal from the predictive filter 3, which has been reproduced by predicting the output waveform of the noise having periodicity, is fed back through the metallic cable 300 to the transmitting side (Fig. 3: S7), and then the modulator 6 controls the constellation to have an optimum transmission efficiency (Fig. 3: S8).

In the following, it is described in detail that the constellation can be controlled to change the amount of the signals so as to relatively change the signal quality output signal.

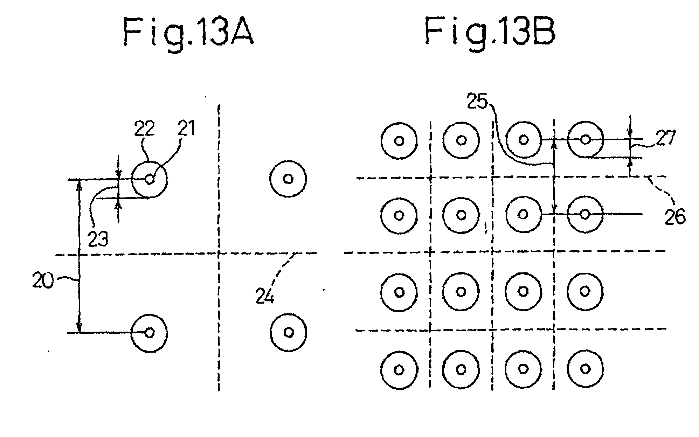

With reference to Fig. 13A and Fig. 13B, it is described that the amount of the noise is controlled by controlling the constellation. Fig. 13A shows the case of four signal points, and Fig. 13B shows the case of sixteen signal points. In both figures, the signal points of the demodulated output, the noise, and decision references are shown.

In Fig. 13A, a noise 22 is added to a signal point 21. Reference numeral 23 represents the amount of the noise. By the use of the decision reference 24, it is decided which area, the upper area, the lower area, the right area, or the left area, the demodulated output with the signal point and the noise belongs. When the noise is larger than the interval 20 between the signal points, the demodulated output with the noise exceeds the deciding reference so as to cause an erroneous judgement, resulting in that the transmission system as a whole generates an error.

In Fig. 13B, the number of the signal points is 16 and a noise is added to each signal point. Reference numeral 27 represents the amount of the noise. In this case, the interval 25 between signal points or the interval between deciding references 26 is smaller than that in the case of Fig. 13A. Accordingly, the influence of a noise is larger so as to lead to an erroneous decision, so that the probability of the generation of an error of the transmission system as a whole is higher.

As described above, by controlling the constellation, that is, by controlling the number of signal points in a signal space diagram, the signal quality output signal can be controlled. When the noise is large, the interval between the signal points is made to be large as shown in Fig. 13A so as to realize data transmission in which the amount of data is small but the tolerance against noise is high. In contrast, when the noise is small, the interval between the signal points is made to be small as shown in Fig. 13B so as to transmit larger amount of data. Thus, according to the amount of noise, an optimum transmission speed can be selected to maintain the high signal quality.

In Japan, ISDN transmission employs the ping-pong transmission method. It is known that, on the metallic cable adjacent to the cable used for the ISDN signal transmission, the ISDN signals of the ping-pong transmission method leak, that is, a cross talk occurs, which causes a noise to deteriorate the transmission quality. It should be noted that, as an example of the cause of the noise, the ping-pong transmission in the ISDN transmission is considered, however, the cause is not limited to this cause, but any noise which is in a high frequency band and which has periodicity may harmfully influence cross talk on the metallic cable.

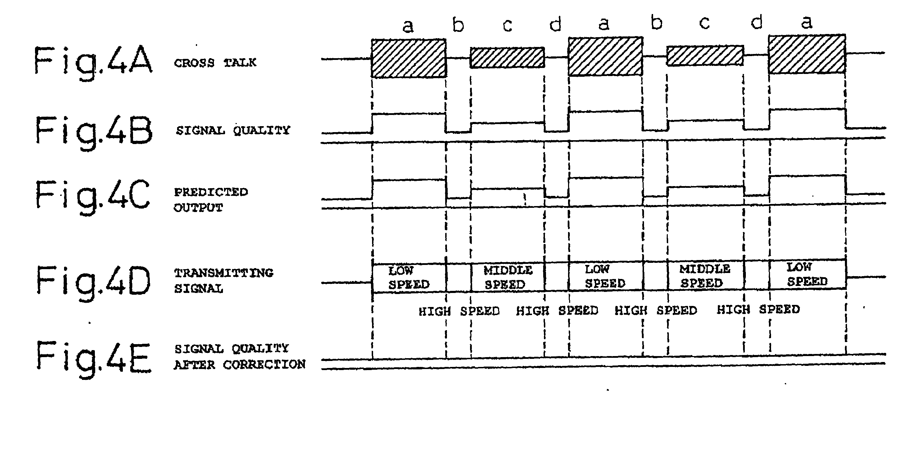

Referring to Figs. 4A to 4E, the output waveforms in the present invention will be described.

Fig. 4A shows cross talk received from adjacent ISDN signals, that is, the amounts of the noise are represented on the time axis. The ISDN signals of the ping-pong transmission are transmitted alternately in the opposite directions. Depending on the location of the cross talk, there are near-end cross talk and far-end cross talk so that the amounts of the cross talk is alternately different (as shown by slash lines). The amounts and the forms of the cross talk are different depending on the phase a, b, c, and, d in each period. Also, the amounts of cross talk are different depending on time. When the adjacent cable does not use the ISDN signal, the cross talk is naturally small.

Fig. 4B shows the signal quality output signal when the constellation is not controlled. The signal quality output signal is output approximately in proportion to the above-mentioned cross talk amount.

Fig. 4C shows an output waveform obtained by the double integration of the signal quality output signal shown in Fig. 4B by the predictive filter 3. This output waveform has almost the same amplitude and the period as those of the cross talk.

The output waveform is fed back to the transmitting side. Then the constellation control is carried out in accordance with the output waveform, so that the signal is transmitted from the transmitting side to the receiving side (see Fig. 4D). To be clear, during a period of the phase a in Fig. 4A, the cross talk is large so that low-speed transmission, which is not largely influenced by the cross talk, is carried out. During periods of the phase b and d, the cross talk is small so that a high-speed transmission is carried out to transmit much data. During a period of the phase c, the cross talk is intermediate so that an intermediate speed data transmission, between the transmission speed in the phases a and the transmission speed in the phase b, is carried out.

Then, by using the data to which the constellation control has been effected, the process to extract the signal quality output signal and the process to predict and reproduce the output waveform of the noise are carried out. By controlling the constellation of the noise having periodicity, theoretically, the cross talk does not influence on the data transmission even when the metallic cable is influenced by the cross talk. That is, as shown in Fig. 4E, high quality data transmission such as the signal quality output signal without the cross talk waveform must be carried out. If, however, the cross talk waveform is again recognized in the signal quality output signal, the extracting process of the signal quality output signal, the predicting and reproducing process for the noise output waveform, the feeding back of the output waveform of the noise, and a further correction of the constellation are repeated appropriate times, whereby it can be possible to finally carry out a high quality data transmission in which the cross talk waveform is not recognized in the signal quality output signal, as shown in Fig. 4E.

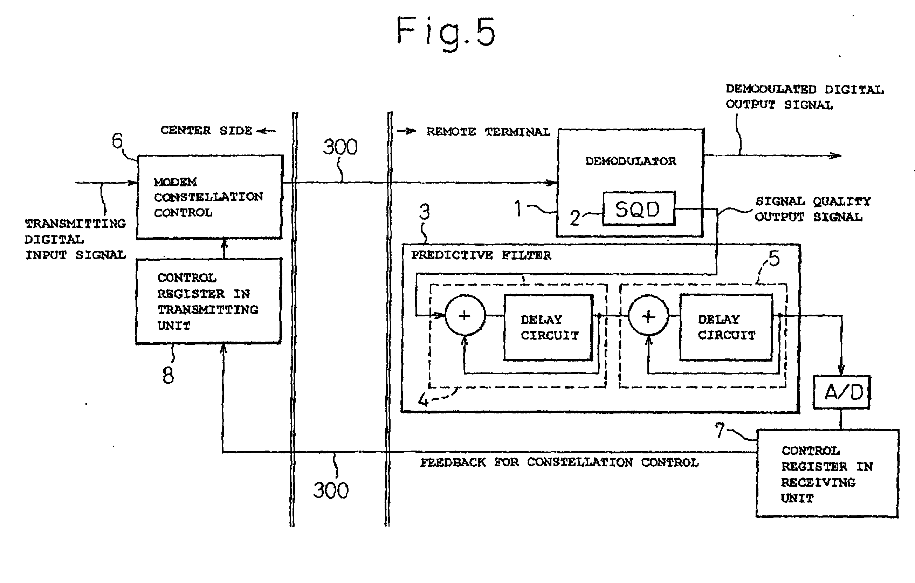

Next, a second embodiment of the present invention will be explained with reference to Fig. 5.

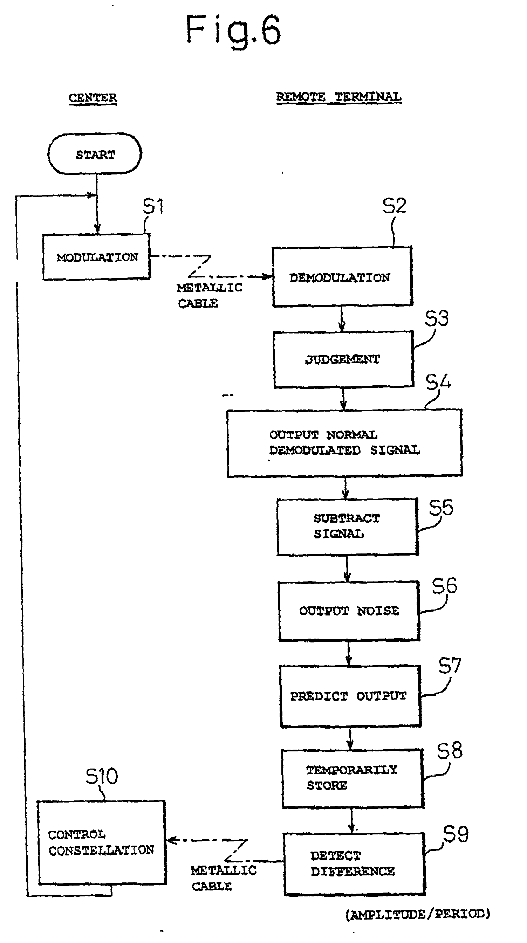

Fig. 6 shows a process flow of the second embodiment.

In Fig. 5, a transmitting digital input signal is input to a modulator 6 and is modulated to be output as a modulated output signal to a metallic cable 300 (Fig. 6: S1).

The signal through the metallic cable 300 is input to a demodulator 1 and is demodulated (Fig. 6: S2). The demodulator 1 outputs a demodulated digital output signal and a signal quality output signal that is output from a signal quality detector (SQD) 2 within the demodulator 1 (Fig. 6: S3).

Fig. 2 shows the signal quality detector (SQD) 2 in detail. As shown in Fig. 2, the demodulated digital output signal, which includes a periodic noise in a high frequency band, such as a cross talk from the ISDN liner as an example, is judged by a decision unit 2a (Fig. 6: S3) to output a deciding reference, i.e., a normal demodulated signal.

After this, a subtracter 2b calculates a difference between the demodulated digital output signal including the periodic noise and the normal demodulated signal (Fig. 6; S5), that is, the subtracter 2b obtains the difference to output the periodic noise N (Fig. 6: S6). The larger this amount is, the larger the difference between the demodulated output and the deciding reference is, that is, the larger the noise is.

Then a dividing circuit (Div) 2c obtains the ratio between the amount of the noise and a signal level information S, i.e., a signal to noise ratio, from the expression N/S.

The obtained SN ratio is output as a signal quality output signal from the signal quality detector (SQD) 2 and is input into a predictive filter 3. The predictive filter 3 includes two-stage integrating circuits 4 and 5 that appropriately sample and average the obtained SN ratio, whereby the input signal is reproduced as a periodical variation on a time axis. Thus, from the receiving signal transmitted through the metallic cable, it is possible to autonmatically predict and reproduce an output waveform represented by the amplitude and the period of the periodic noise (Fig. 6: S7). This is converted into a digital signal by an A/D converter and is temporarily stored in a control register 7 in the receiving unit (Fig. 6: S8).

To the data received next, the processes from S2 to S7 are applied similarly. Then, the wave form of the output signal of the noise previously stored is compared with the wave form of the output signal of the noise measured this time to determine whether or not there is a difference (Fig. 6: S9). If a difference is detected, a feed back to the center side is carried out to control the constellation. In the center side, the information is temporarily stored in a control register 8 in the transmitting side and, then, it is supplied to the modulator 6 for carrying out the control of the constellation so as to obtain the optimum transmission efficiency to the data to be sent next (Fig. 6: S10).

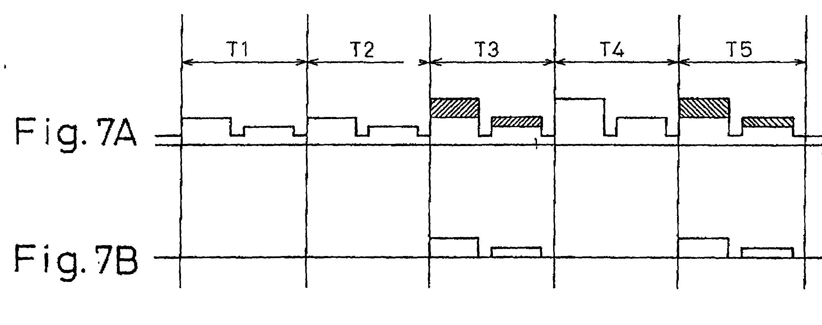

Figs. 7A and 7B show the difference signal in detail. Fig. 7A shows the output waveform of the noise which is output from the predictive filter 3. Fig. 7B shows the difference signal. The predictive filter 3 outputs a waveform consisting of an amplitude and a period for each of the periods in the predetermined time interval. The difference signal is a difference between the output waveform that is predicted in any period and the output waveform that has been predicted in a period earlier by one period than the above-mentioned period and has been stored in the control register 7 in the receiving unit.

At each of the periods T1, T2, ..., and T5, the output waveform of the noise is output from the predictive filter 3. Then it is determined whether or not there is a difference between the output waveform in the period T2 and the output waveform in the period T1, or, to be more clear, it is determined whether or not there is a difference between the amplitude and the period in the period T2 and the amplitude and the period in the period T1. Since the output waveform in the period T1 is the same as the output waveform in the period T2, no difference signal is output.

There is a difference between the output waveform in the period T3 and the output waveform in the period T4, that is, the amplitude of the output waveform in the period T3 is larger than the amplitude of the output waveform in the period T2 by an amount indicated by slash lines with positive inclination. Therefore, a positive difference signal is output. Only the difference of the amplitudes is output as the difference signal as shown in Fig. 7B.

Since the output waveforms in the period T4 and in the period T3 are the same, no difference signal is output. There is a difference between the amplitudes of the output wave forms in the period T5 and in the period T4, that is, the amplitude of the output wave form in the period T5 is decreased in comparison with the amplitude of the output wave form in the period T4 by an amount indicated by slash lines with a negative inclination. Therefore, the amplitude difference is output as a difference signal. It should be noted that the fact that the difference signal of the difference between the period T5 and the period T4 is a negative difference signal is also informed to the transmitting side.

If there is a difference between the output waveform detected in the current period and the output waveform detected in the initial period or detected in the period one cycle before the current period, the output waveform of the noise detected in the current period is temporarily stored in the control register 7 in the receiving unit, and the difference is fed back to the center side for controlling the constellation.

In this way, according to the second embodiment, by taking the periodicity of the noise into account, only the difference of the output waveforms of the noise is transmitted to the center side, and since the difference is converted into a digital signal, the transmission requirement is small in the realization of the optimum control of the constellation.

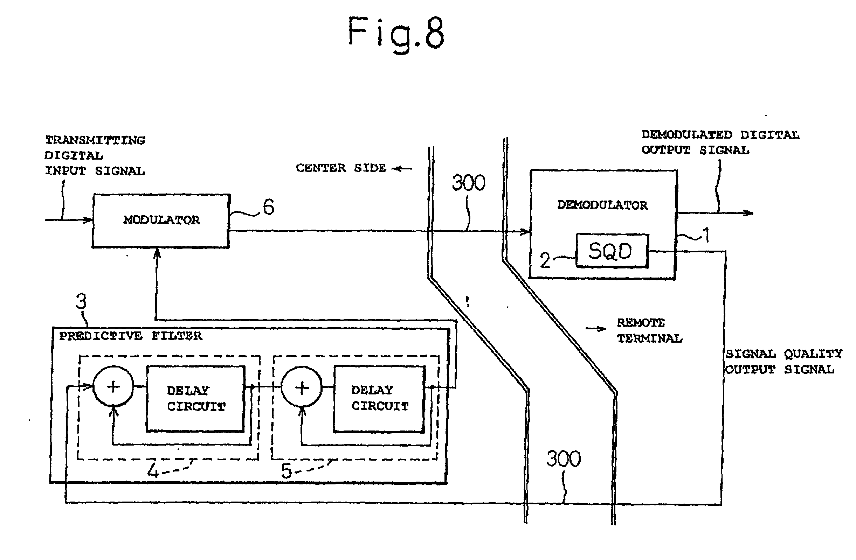

Next, a third embodiment of the present invention will be described with reference to Fig. 8.

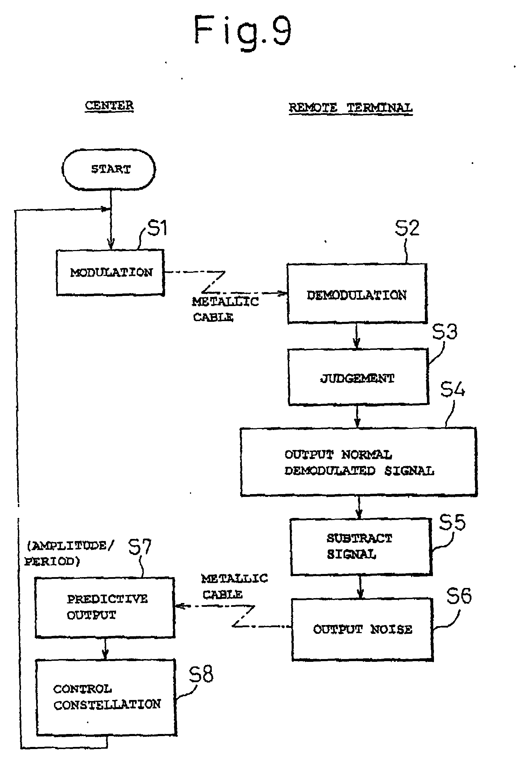

Fig. 9 is a flow chart of the process in the third embodiment.

In Fig. 8, a transmitting digital input signal is input into a modulator 6 and is modulated to be a modulated output signal that is output to a metallic cable 300 (Fig. 9: S1).

The signal through the metallic cable 300 is input to a demodulator 1 and is demodulated (Fig. 9; S2). The demodulator 1 outputs a demodulated digital output signal and a signal quality output signal that is output from a signal quality detector (SQD) 2 within the demodulator 1.

Fig. 2 shows the signal quality detector (SQD) 2 in detail. As shown in Fig. 2, the demodulated digital output signal, which includes a periodic noise in a high frequency band such as a cross talk from the ISDN line as an example, is judged by a decision unit 2a (Fig. 9; S3) to output a deciding reference, i.e., a normal demodulated signal.

After this, a subtracter 2b calculates a difference between the demodulated digital output signal including the periodic noise and the normal demodulated signal (Fig. 9: S5), that is, the subtracter 2b obtains the difference to output the periodic noise N. The larger this amount is, the larger the difference between the demodulated output and the deciding reference is, that is, the larger the noise is. Then a dividing circuit (Div) 2c obtains the ratio between the noise N and a signal level information S, i.e., a SN ratio, from the expression N/S.

The obtained SN ratio is transmitted as a signal quality output signal through the metallic cable 300 to a predictive filter 3 provided in the center side (Fig. 9: S6).

The predictive filter 3 includes two-stage integrating circuits 4 and 5 which appropriately sample and average the obtained SN ratio, whereby the input signal is reproduced as a periodical variation on a time axis. Thus, it is possible to predict and reproduce, from the receiving signal transmitted through the metallic cable, an output waveform representing the amplitude and the period of the periodic noise.

The output signal from the predictive filter 3, which has been reproduced by predicting the output waveform of the noise having periodicity, is transmitted to the modulator 6 (Fig. 9: S7), and then the modulator 6 controls the constellation to have an optimum transmission efficiency (Fig. 9: S8).

In this way, the location of the predictive filter 3 may not be limited to the receiving side or the transmitting side.

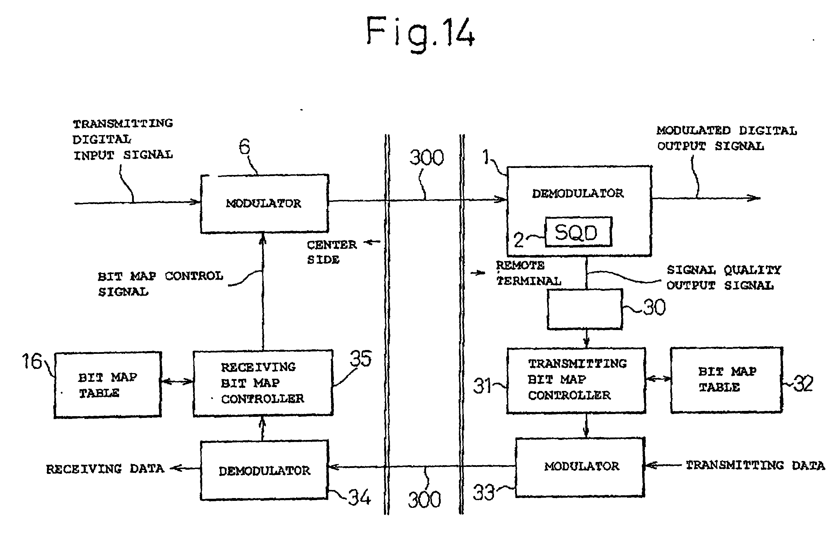

Next, a fourth embodiment of the present invention will be described with reference to Fig. 14.

In Fig. 14, a transmitting digital input signal is input into a modulator 6 and is modulated to be output as a modulated output signal.

The output signal is input through a metallic cable 300 to a demodulator 1 at the user side and is demodulated. The demodulator 1 outputs a demodulated digital output signal and a signal quality output signal that is output from a signal quality detector (SQD) 2 within the demodulator 1.

Here, the signal quality output signal, which is the output signal from the signal quality detector (SQD) 2, is an analog value of a ratio between the received signal energy and the received noise energy (hereinafter referred to as SN). The obtained SN is input as an analog signal quality output signal to a periodic noise estimating circuit 30. The periodic noise estimating circuit 30 has staring elements each for storing SN of one noise period, In each storing element, the signal quality output signal is integrated and is averaged. During this averaging, by applying a weighting process, the time necessary to estimate the periodic noise waveform can be shortened.

From the periodic noise estimating circuit 30, an SN at each modulating point in the noise period is output and is input to a receiving bit-map controller 31. When the transmitting method is the DMT, an SN at each modulating signal point and for each tone is input into a receiving bit-map controller 31. In the following, the explanation is continued with the DMT transmission method as an example.

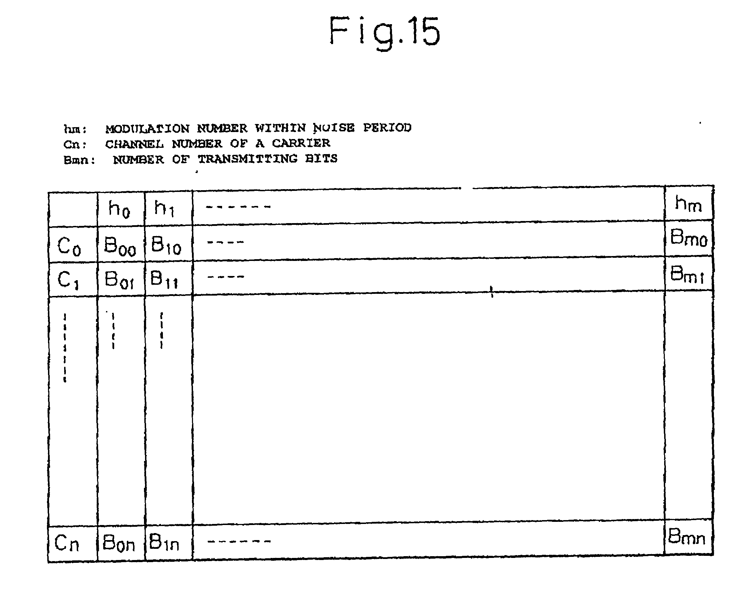

In the receiving bit-map controller 31, the number of transmitting bits is calculated front the input SN, and the number of transmitting bits, which can be received at each tone, is held in a bit-map table shown in Fig. 15.

Fig. 15 shows the bit-map table 32, in detail, wherein the number of transmitting bits which can be received is held in the form of a two dimensional arrangement Bₘₙ for each modulating point hₘ and for each tone Cₙ. Here, in Fig. 15, hₘ represents the number of the signal point in the noise period, and Cₙ represents a tone number.

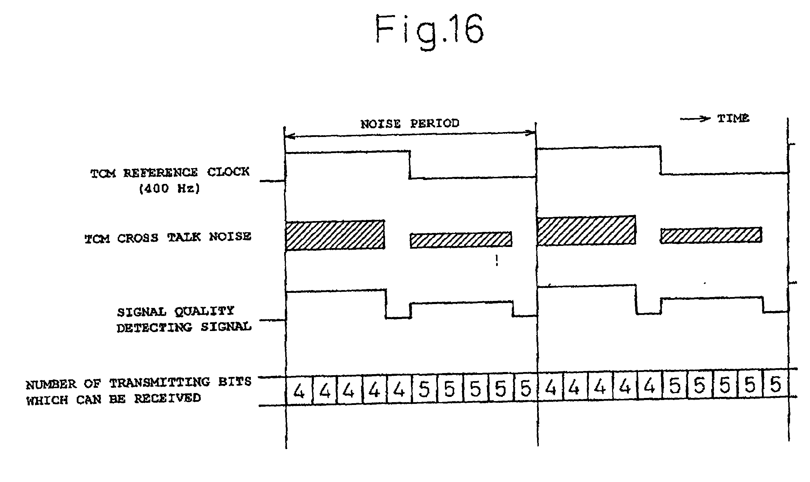

The relation among these periodic noises, signal quality output signal, and the number of transmitting bits that can be received is shown in Fig. 16 in which a cross talk from the ISDN ping-pong transmission (hereinafter referred to as TCM) is an example of the periodic noise.

In Fig. 16, a TCM cross talk, which is a periodic noise synchronized with a TCM reference clock, is included as a noise in a receiving signal. The signal quality output signal calculated from the receiving signal is also represented in a form synchronized with the TCM reference clock. From the bit-map controller 31, the number of transmitting bits that can be received for each modulating point in the noise period can be calculated as a bit map. Here, the TCM cross talk, the signal quality output signal, and the bit map are present for each tone. In Fig, 16, when the cross talk is small, the number of bits is 5; and when the cross talk is large, the number of bits is 4. At an intermediate point between the large cross talk and the small cross talk, the number is the value for the large cross talk so as to lower the probability of the generation of a transmission error.

In the example shown in Fig. 16, the transmitting bits that can be received are divided into 10, i.e., there are 10 modulating points, however, the number is not restricted to this, and may be, for example, 2, 3, 4, etc.

When the number of the transmitting bits which can be received is changed, the bit-map controller 31 outputs, by referring to a bit-map table 32, only difference information indicating the difference among the all bit maps, to a modulator 33 at the side of the remote terminal. In the bit-map table 32, the changed portions are updated for each modulating point (hₘ) one after another.

The difference information includes hₘ, Bₘₙ, and a changing time t designated at the modulator 6 at the center side. The changing time t may be a number assigned for each modulation recognized by the center side and the user side to each other.

The modulator 33 in the remote terminal transmits, as feedback, the input difference information through the metallic cable 300 to the canter side. This is transmitted by the use of the transmitting data sent from the user side to the center side. To be more concrete, this transmitting data is divided into a control part and a user data part, and the difference information indicating the change of the number of bits is superimposed on the control part consisting of information indicating the status of the receiving side such as signal quality, receiving energy or the like.

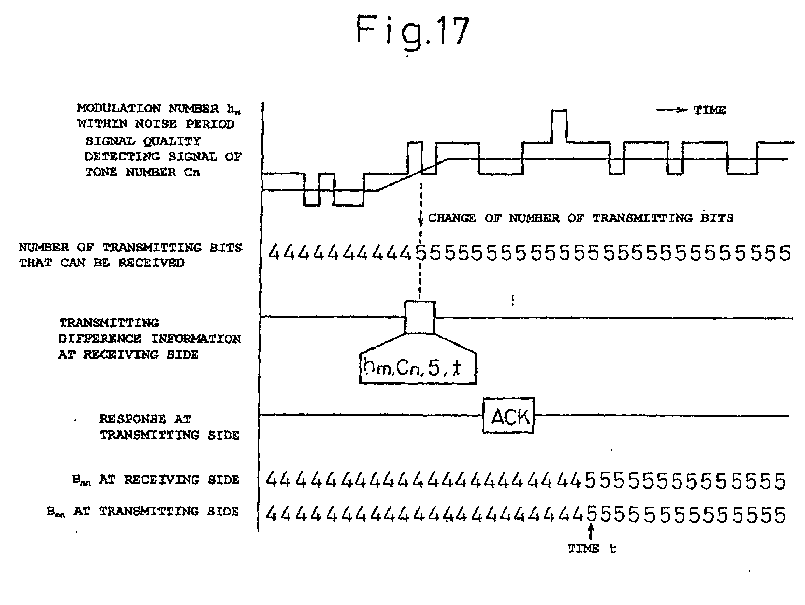

In the demodulator 34 at the center side, the received difference information is input to the receiving bit-map controller 35. The receiving bit-map controller 35 reflects, by using the bit-map table 36 which is the same as the bit-map table 32 described with reference to Fig. 15, the values of the difference information hₘ, Cₙ, Bₘₙ in the differential information. This is shown in Fig. 17.

In Fig. 17, the value of the signal quality output signals of the modulation number hₘ within the noise period and the value of the signal quality output signal of the tone signal Cₙ are gradually increased from a time t₀, and, the number of transmitting bits that can be received is changed from 4 to 5 at a time t1. At this change, the receiving bit-map controller 35 inputs the difference information of the number hₘ of the modulation in the noise period, the tone number Cₙ, the number Bₘₙ of the transmitting bits, and the updating time t into the modulator 6. At the center side, an acknowledge (ACK) is returned in response to this change request. When this response is affirmative, the number of transmitting bits at the center side (the bit map Bₘₙ at the transmitting side) and the number of transmitting bits at the side of the remote terminal (the bit map Bₘₙ at the receiving side) are changed respectively.

The receiving bit map controller 35 shown in Fig. 14 transmits a bit map control signal to the modulator 6 to control the number of transmitting bits in accordance with the transmitting bit map. That is, the constellation is controlled. This allows data transmission at an optimum communication speed under periodic noise.

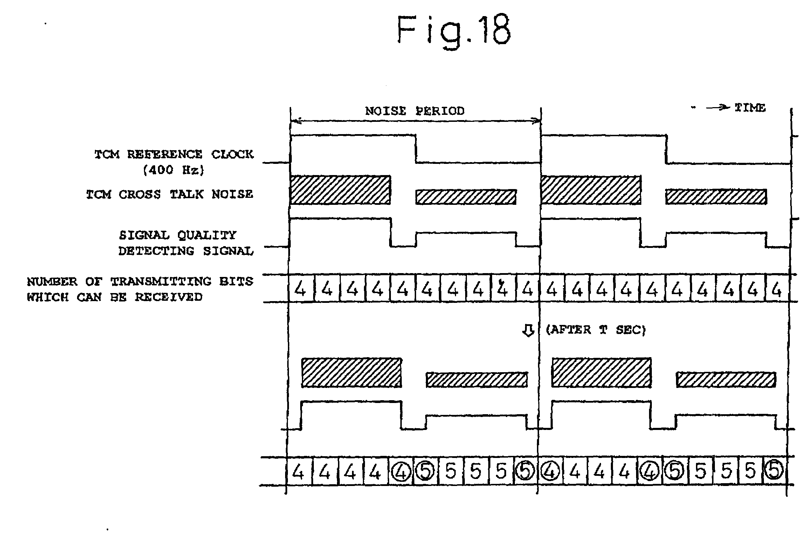

Fig. 18 shows a periodic noise and the bit map Bₘₙ at the initial period of communication after a time t seconds has passed. In Fig. 18, immediately after starting the communication, the difference information of Bₘₙ is not yet sent so that the bit maps have the same values for each tone. The initial value is usually the value calculated based on the average value of the noise, however, here, it is set to be around the number of transmitting bits corresponding to the maximum noise amount within one noise period, that is, around the number of transmitting bits by which noise having the maximum amount can be normally received. By setting so, in the period immediately after starting the communication, all data can be received, and after that, by sending the difference information of the transmission bits as described above, the transmission can be effected, at any time after t seconds from the start of the communication, with the optimum number of transmitting bits for each modulation number in the noise period.

In Fig. 18, there may be a case in which a clock that is the same as the TCM reference clock is not supplied from the outside. In this case, the phase of the noise period may shift with respect to the phase of the noise period in the apparatus.

In a DMT transmission system, the modulation period is large so that the frequency deviation between the noise period and the noise period in the apparatus tends to be large, and consequently the speed of the phase shift tends to be large.

However, in DMT transmission, a cyclic prefix signal, which is a redundancy signal, is sent between modulation signals in order to reduce interference between blocks. Since the variable unit of the length of the cyclic prefix signal is sufficiently short, the above-mentioned frequency deviation can be made small by changing the length of the cyclic prefix signal, and the speed of the phase shift can be made to be low.

Further, by making the speed of the phase shift to be low, the amount of the difference information can also be made small.

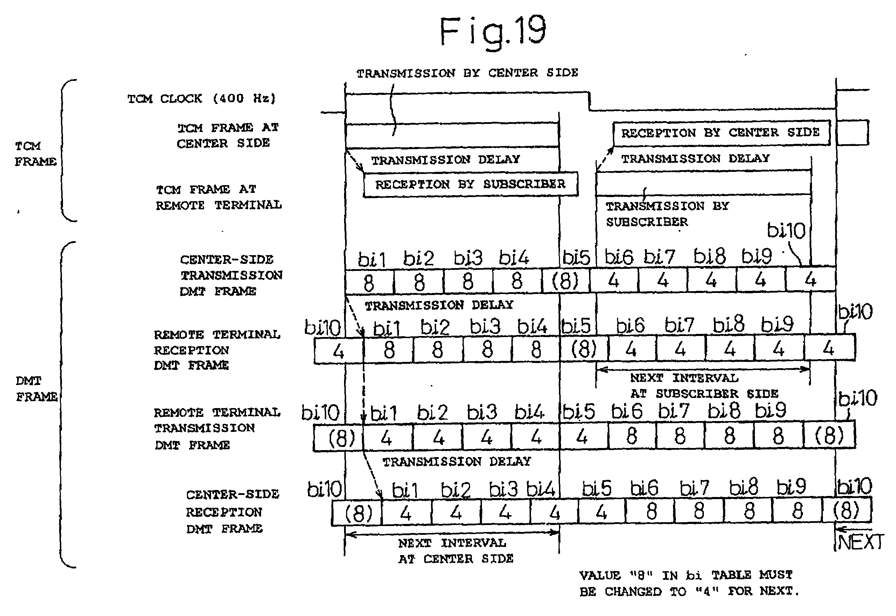

Fig. 19 shows a method to avoid the bi table for a far end cross talk (FEXT) to wrap around and to be entered into the bi table for a near end cross talk (NEXT) interval due to a round trip delay, by changing the ratio between the number of the bi tables for the FEXT and the number of the bi tables for the NEXT.

In Fig. 19, the center side transmits a TCM frame in synchronization with a TCM clock (400 Hz) (hereinafter referred to as TCM clock). At the remote terminal, this is received with a transmission delay that is proportional to the length of the line. After this reception, the remote terminal transmits a remote terminal-side frame. At the center side, the remote terminal-side frame is received similarly with the transmission n delay.

Here, a case is shown in which the ADSL at the center side transmits the DMT frame (center-side transmission DMT frame). At the remote terminal, a remote terminal-side reception DMT frame is received with a transmission delay that is the same as the transmission delay of the TCM. At the remote terminal, a remote terminal-side transmission frame is transmitted with its phase in coincidence with the phase of this reception frame. The center side receives this frame (center-side reception DMT frame) with the same transmission delay time.

The phase difference (delay) between the transmission frame and the reception frame due to the above-mentioned transmission delay is referred to as a round trip delay.

In the DMT frame received within one TCM period, the NEXT interval having a larger noise amount is about a half of one TCM period. Therefore, a case is considered in which the bi table for the NEXT are applied to five frames in the 10 DMT frames. In Fig. 19, for a certain carrier in the DMT, the number of bits in the bit index table (bi table) received in the NEXT interval is assumed to be 4, and the number of the other bits in the bi table is assumed to be 8. The sixth bit in the remote terminal-side reception DMT frame is the bi table for the FEXT interval, however, due to the transmission delay, it enters into the NEXT interval. Also, the tenth bit in the remote terminal-side reception DMT frame is suffered the round trip delay so that the frame for the FEXT interval is rounded and entered into the NEXT interval. By means of a multi-bit table system, the value for the NEXT interval : the value for the FEXT interval in the bi table is made to be 6:4, whereby the rounding and entering of the DMT frame of the FEXT interval into the NEXT interval can be avoided.

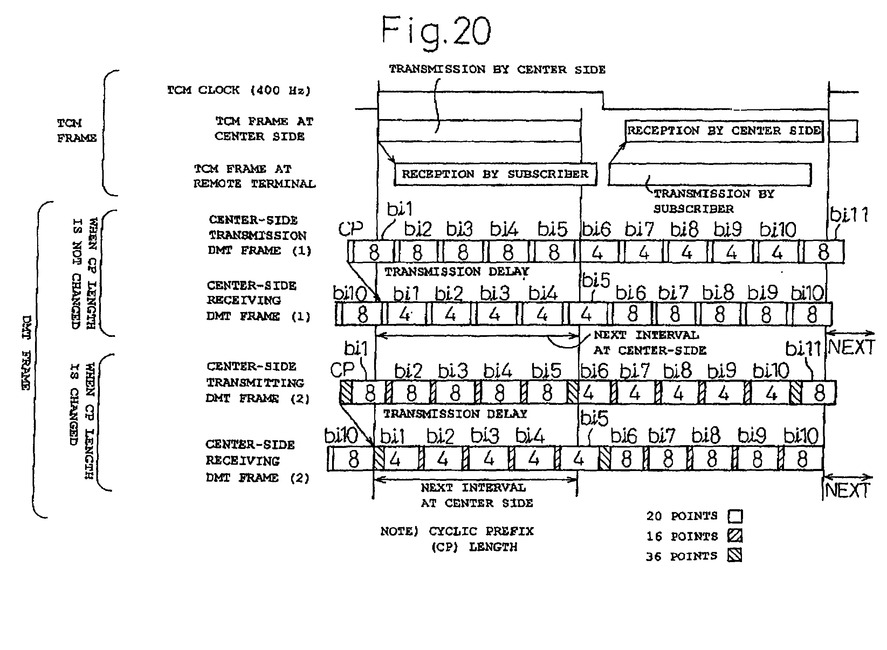

Fig. 20 shows a method to change the cyclic prefix (CP) length for avoiding the above-mentioned round trip delay.

In Fig. 20, in order to reduce the influence of the round trip delay, when a transmission is effected by making the phase of the transmitting DMT frame at the center side to be in coincidence with the end of the TCM frame at the center side, the rounding and entering of the receiving frame at the remote terminal for the FEXT interval into the NEXT interval can be avoided, however, the rounding and entering due to the round trip delay cannot be avoided (this is the case when the DMT frame CP length is not changed in Fig. 20).

In contrast, as shown in Fig. 20, when the CP length in the DMT frame is changed so that the first and the sixth CP lengths are changed from 20 points to 36 points, and when the other CP lengths are changed from 20 points to 16 points, the rounding and entering of the frame for the FEXT frame due to the round trip delay can be avoided.

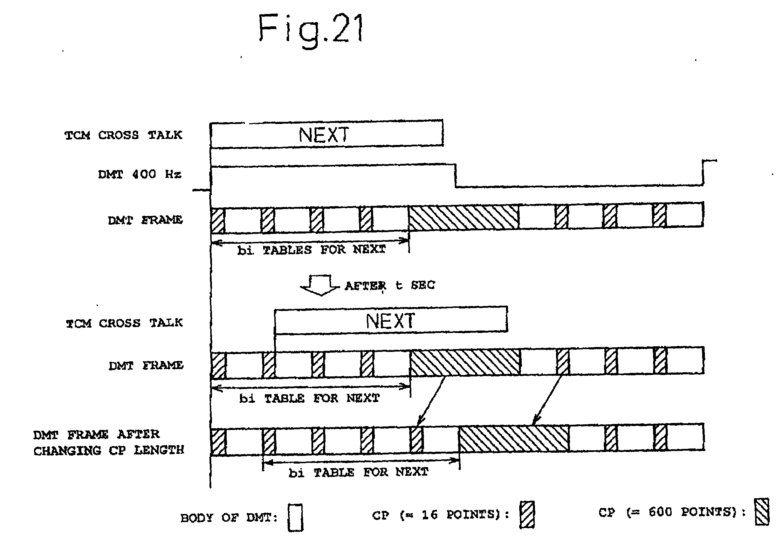

Fig 21 shows a method to change the cyclic prefix (CP) length so as to reduce the number of bi tables for the NEXT interval to one half of the number of the DMT frames.

In Fig. 21, a situation is shown in which the phase of the DMT 400 Hz becomes to be different from the phase of the DMT cross talk because there is a frequency deviation between the frequency of the TCM cross talk (400 Hz) and the DMT 400 Hz made by dividing the DMT frame. Usually, even when the frequency of the TCM cross talk becomes to be different from the DMT 400 Hz, no error is generated by making the number of bi tables for the NEXT interval to be one plus a half of the number of the DMT frames within the DMT 400 Hz. In Fig. 21, one frame having a longer CP length is prepared, and when the TCM cross talk is shifted, the number of the bi tables for the NEXT interval can be made to be a half of the number of the DMT frames within the DMT 400 Hz by changing the CP length. In the example shown in Fig. 21, the CP length is 16 or the 600.

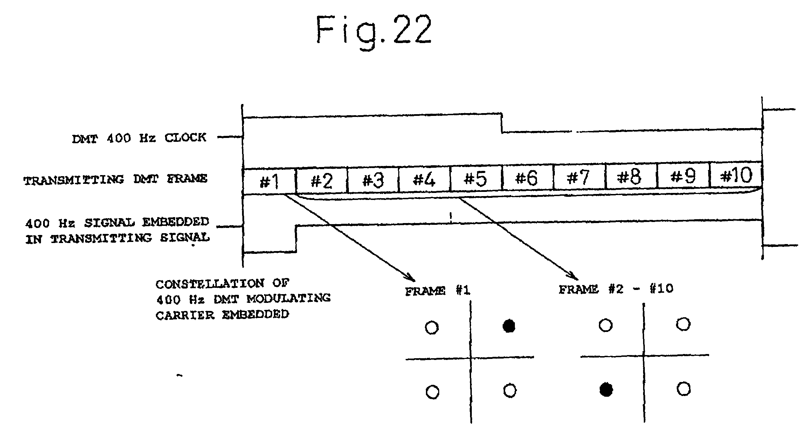

Fig. 22 shows a method to transmit the DMT symbol divided 400 Hz clock.

In Fig. 22, a particular carrier in the DMT frame is used, and as shown in the figure, when the signal point of the carrier is in the first frame #1 in each period of the 400 Hz clock, a signal point in the first quadrant is transmitted, and when the signal point of the carrier is at the other position, a signal point in the fourth quadrant is transmitted. Then at the receiving side, after demodulation, the phase of the DMT 400 Hz can be detected from these signal points.

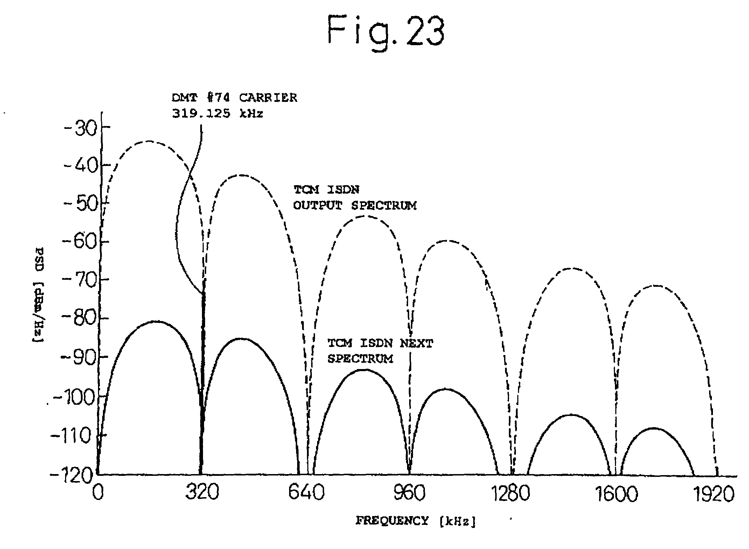

Fig. 23 shows a DMT carrier that can be received even when there is a TCM NEXT. In Fig. 23, a TCM ISDN output and its NEXT spectrum are shown. In the figure, there is no NEXT at the frequency of an integral multiple of 320 KHz. When information in the NEXT interval is to be transmitted such as when the above-mentioned DMT 400 Hz is to be transmitted, a carrier near 320 KHz (in ADSL, 74^{th} carrier signal = 4.3215 KHz74 x 74=319.125 KHz) is used to reduce the cross talk of that frequency whereby the transmission is made possible.

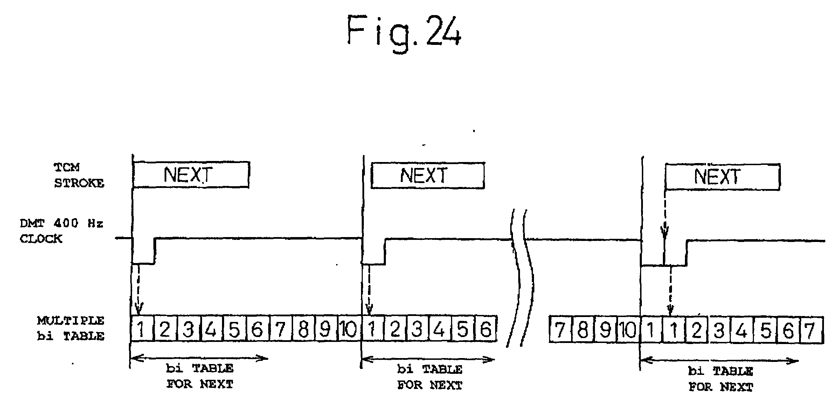

Fig. 24 shows a method to perform a PLL control to synchronize with the TCM cross talk.

In Fig. 24, a DMT 400 clock is transmitted and a multiple bi tables are synchronized with this. The period of the TCM cross talk is 400 Hz, however, there is a frequency deviation between DMT 400 Hz clock and the TCM cross talk so that the phase is gradually shifted. Here, as shown in Fig. 24, when the TCM cross talk is shifted by one DMT frame, the DMT 400 clock is also made to be shifted by one DMT frame, whereby the PLL control is applied to the multiple bi tables with the DMT 400 Hz so that the multiple bi tables can be synchronized with the TCM cross talk.

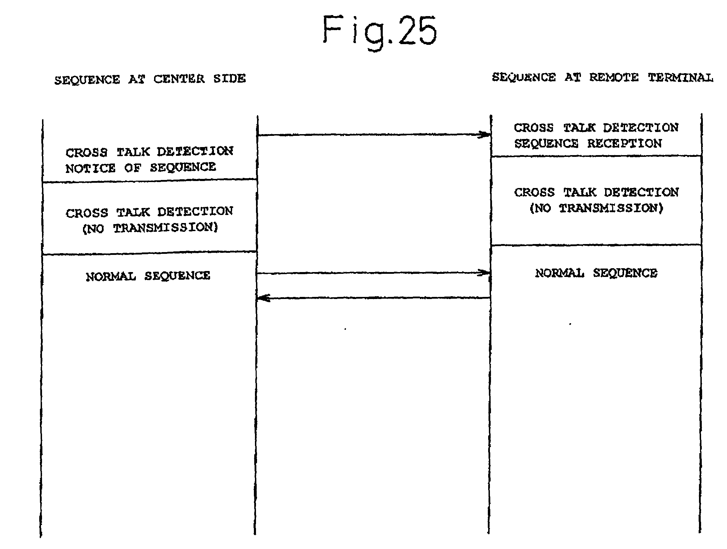

Fig. 25 shows a cross talk detection sequence.

In Fig. 25, in order to make it possible to perform an initialization for the data communication even in an environment where there is a TCM cross talk, a sequence is shown to detect a cross talk before performing an initialization sequence (normal sequence). Here, as an example, at both the center side and the remote terminal, null transmission state is made, and during this period, the cross talk and the phase are detected.

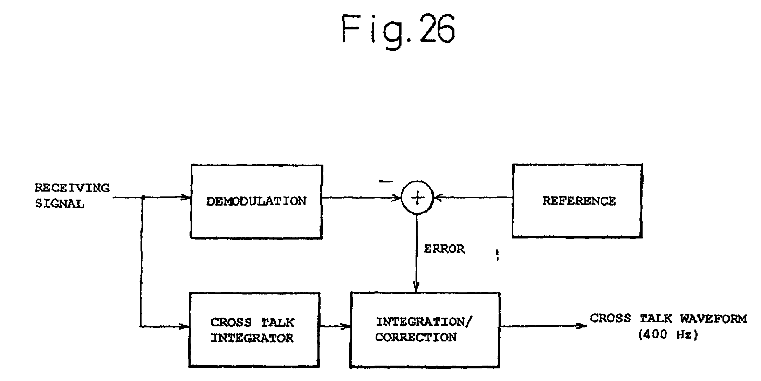

Fig. 26 shows a method to measure a cross talk.

In Fig. 26, a receiving signal is input into a demodulator to be modulated. The difference between the modulated result and a reference value is obtained as an error to measure a cross talk. In Fig. 26 also, apart from the system to measure the cross talk using the error as a usual demodulated result, a system to measure the cross talk by power calculation is also provided. Since this cross talk integrator obtains the cross talk amount by calculating the power, the cross talk can be measured even when the opposite party does not transmit data.

Also, by combining the demodulating system and the output of the cross talk integrator, and by performing a correction, a more precise cross talk can be measured.

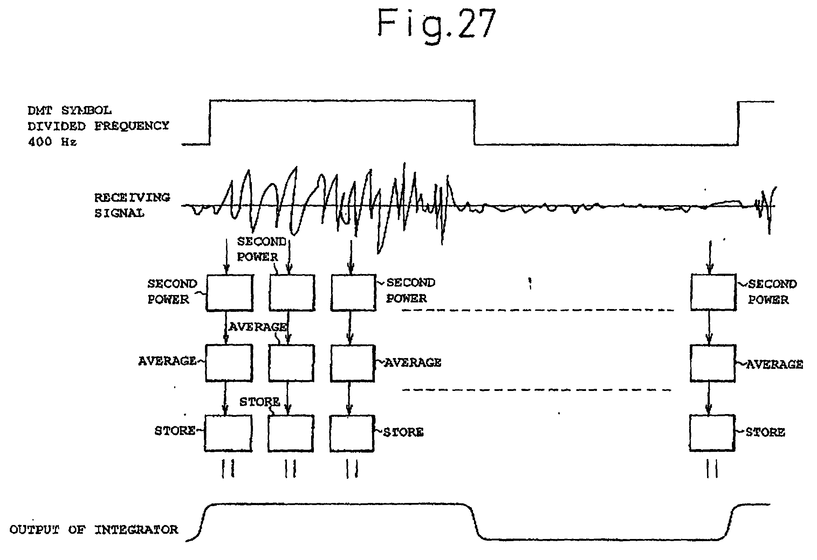

Fig. 27 shows the general process effected by the cross talk integrator.

In Fig. 27, the frequency of the DMT symbol is divided to form a divided frequency 400 Hz of the DMT symbol. Within each period of the 400 Hz, the receiving signal is raised to a second power, is averaged, and is stored at each sampling point. This operation is effected a plurality of times in each period of 400 Hz so that the stored values represent the 400 Hz signal which is synchronized with the TCM cross talk. Further, by obtaining the difference between the maximum value and the minimum value of the 400 Hz signal, the amount of NEXT noise can be measured.

By using this difference value, the cross talk can be detected regardless of whether or not the opposite party sends data.

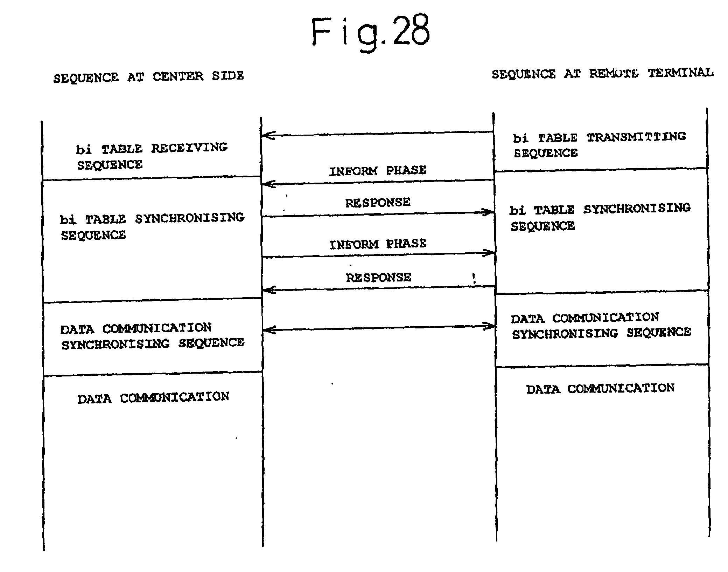

Fig. 28 shows a sequence to establish the synchronization between the bi tables and the DMT frame.

In the ADSL transmission, after sending the bi information to the opposite party, a synchronization sequence for data communication (data communication synchronization sequence) is effected, and then data communication is performed.

In a system in which the TCM 400 Hz and the 400 Hz obtained by dividing the DMT symbol are asynchronous to each other, the phase of the bi tables at the start of the data communication must be informed to the opposite party. In Fig. 28, it is shown that, in order to inform the bi tables to the opposite party in an asynchronous system, both the center side and the remote terminal conduct a sequence of "inform phase" and "response" to establish the synchronization of the bi tables.

As has been described, according to the present invention, the following effects can be obtained.

To the noise having a high frequency band and having a periodicity such as a cross talk from the ISDN signal, which employs a ping-pong transmission, an optimum constellation can be automatically selected to realize an optimum transmission.

In addition, since the predictive filter passes an analog signal even on the time axis, the periodicity of the noise can be reproduced independently from its own sampling period.

Further, without obtaining a synchronization signal from the ISDN equipment, which employs the ping-pong transmission, an optimum transmission method can be realized by its own ADSL equipment. Therefore, in comparison with the method in which the synchronization signal is obtained from the other equipment, the system installation is easy and the system construction is simple.

Still further, since a particularly determined period of noise is not necessary and the synchronization with a particular signal is not performed, compensation and optimization to noise over a wider range can be performed.

Still further, since the modulation and the demodulation system employ a usual system, the present invention can be applied to the conventional transmission system or a standardized transmission system without any modification.

Still further, the system according to the present invention can be realized by adding equipment, modules, or parts that can be applied to the conventional transmission system or the standardized transmission system as they are, as additional circuits or as modules.

## Claims

1. A transmission method for a remote terminal line for performing a high speed data transmission by using a high frequency band of the remote terminal line while coexisting with a telephone, characterized in that it comprises the steps of;
extracting a signal quality output signal including a periodic noise from a receiving signal received through said remote terminal line; and
sampling said signal quality output signal and averaging the sampled data;
whereby the amplitude and the period of said noise is predicted.

2. The transmission method for a remote terminal line as claimed in claim 1 characterized in that it comprises the steps of:
feeding back of said predicted amplitude and period of said noise to a transmitting side; and
controlling constellation of the transmitted data based on the amplitude and the period of said noise that has been fed back.

3. The transmission method for a remote terminal line as claimed in claim 1 characterized in that it comprises the steps of:
temporarily storing the amplitude and the period of said predicted noise;
when there is a difference between the amplitude and the period of a newly predicted noise and the amplitude and the period of said stored noise, feeding back the difference as a difference signal to the transmitting side; and
controlling the constellation of the data to be transmitted based on the fed-back difference signal.

4. A transmission method for a remote terminal line for performing a high-speed data transmission by using a high frequency band of the remote terminal line while coexisting with a telephone, characterized in that it comprises the steps of:
extracting a signal quality signal including a periodic noise from a receiving signal received through said remote terminal line;
sending said extracted signal quality output signal to a transmitting side; and
sampling, at said transmitting side, said signal quality output signal and averaging the sampled values, whereby the amplitude and the period of a noise included in said signal quality output signal is predicted.

5. A transmission method for a remote terminal line for performing a high-speed data transmission by using a high frequency band of the remote terminal line while coexisting with a telephone, characterized in that it comprises the steps of:
detecting a noise having a periodicity from a receiving signal received through said remote terminal line;
temporarily storing the information relating to said detected noise: and
when there is a difference between the amplitude and the period of a newly predicted noise and the amplitude and the period of said stored noise, feeding back the difference as a difference signal to the transmitting side.

6. The transmission method for a remote terminal line as claimed in claim 5 characterized in that said difference signal includes the number of transmitting bits and the position information indicating the position where the number of said transmitting bits is changed.

7. The transmission method for a remote terminal line as claimed in claim 5 characterized in that the number of the transmitting bits immediately after starting the communication is set to be the number of bits by which the maximum noise amount within one period can be received,.

8. A noise predicting method characterized in that it comprises the steps of:
extracting a signal quality output signal including a periodic noise from a received signal; and
sampling said signal quality output signal to average, whereby the amplitude and the period of said noise is predicted.
